# EUROPEAN PATENT APPLICATION

(11) **EP 1 329 294 A1**
(43) Date of publication of application: **23.07.2003**
(21) Application number: 02354012.3
(22) Date of filing: 21.01.2002
(51) Int. Cl.: B25B 23/14, B25B 23/147, B23P 19/06

(54) **Rotary motor driven tool**

(71) Applicant: Hewlett-Packard Company, A Delaware Corporation, Palo Alto, CA 94304 (US)
(72) Inventor: Setton, Joel, 38190 Crolles (FR); Fort, Philippe, 38800 Campagnier (FR)
(74) Representative: Lloyd, Richard Graham (GB)

(57) **Abstract**

A rotary motor driven tool comprising a motor, and a driven part, the motor being adapted to rotate the driven part, and a torque limiting device adapted to limit torque output of the driven part to a maximum output torque magnitude, wherein the tool further includes a switching apparatus which operates automatically to initiate switching of the maximum output torque set by the torque limiting device from a first lower magnitude to a second higher magnitude when a predetermined threshold is reached.

## Description

### Field of the Invention

This invention relates to a rotary motor driven tool, particularly, but not exclusively, to motor driven screwdriver for use in assembling components in a production line.

### Background of the Invention

When assembling components in a production line, for example components of a personal computer, it is common for an operator to join components using screws and to use a motor driven screwdriver to drive each screw into its corresponding screw receiving part.

If, however, the operator inserts the screw incorrectly into the screw receiving part, for example, by placing the screw in the screw receiving part so that the longitudinal axis of the screw is not parallel to a longitudinal axis of an aperture provided to receive the screw, and a motor driven screwdriver is then used to drive the screw into the aperture, the screw receiving part may be irreparably damaged owing to the high torque provided by the screwdriver, and it may be necessary to discard the component.

It is known to provide a motor driven screwdriver with a torque limiting device which disengages the motor from a driven part or de-energises the motor once the torque provided by the motor reaches a specified limit. When a screw approaches its final position in a screw receiving part, the resistance to further turning of the screw increases dramatically, and consequently, the torque applied by the motor to the driven part must increase to continue rotation of the driven part. The torque limiting device may thus be used to de-energise the motor or disengage the motor from the driven part when the screw reaches its final position in the screw-receiving part.

Where the motor is an electric motor, it is also known to control the maximum torque capable of being provided by the motor, by controlling the magnitude of the electric current flowing through the motor coils.

It is, however, necessary to set the maximum torque at a sufficiently high magnitude to enable the screwdriver to overcome the usual resistance to driving the screw into its final position, and if the screw is inserted incorrectly, it is likely that irreparable damage would have been caused to the screw receiving part before the torque limiting device is activated.

It is, of course, possible to avoid this problem by providing the operator with a non-motor driven screwdriver, so that he may manually drive screws into particularly valuable or easily damaged components. The operator may then engage the screw in the screw receiving part and drive the screw one or two turns, for example, using a low torque, to establish if the screw has been inserted correctly in the screw receiving part. By virtue of the low torque applied manually by the operator, no or little damage will be caused to the screw receiving part if the screw is incorrectly inserted. The operator may then use a motor driven screwdriver to finish driving the screw into its final position in the screw receiving part.

This would, however, increase the time taken to drive a screw into its final position, and if the operator had to regularly swap between motor-driven and manual screwdrivers, the time taken to assemble the components would increase further. In the context of a production line, where maximum speed is required to achieve maximum efficiency, this is clearly not a desirable, cost effective solution.

An aim of the invention is to reduce or overcome one or more of the above problems.

### Summary of the Invention

According to a first aspect of the invention, we provide a rotary motor driven tool comprising a motor, and a driven part, the motor being adapted to rotate the driven part, and a torque limiting device adapted to limit torque output of the driven part to a maximum output torque magnitude, characterised in that the tool further includes a switching apparatus operable to switch the maximum output torque set by the torque limiting device from a first lower magnitude to a second higher magnitude when a threshold criterion is reached.

The switching apparatus may be responsive to the number of revolutions of the driven part and wherein the criterion threshold comprises a preselected number of revolutions to be executed by the driven part.

The switching apparatus may comprise a counter which is operable to count the number of revolutions the driven part has executed.

The driven part may be provided with at least one marker device, and the switching apparatus may comprise an optical detector operable to detect when the marker device is at a given location and transmit a signal to the counter.

The switching apparatus may alternatively operate when the driven part has rotated for a predetermined length of time.

The driven part may be adapted to engage a screw head, such that the tool may be used to drive a screw into a screw receiving part.

The motor may be an electric motor, and the torque limiting device may comprise a current limiting device which sets a maximum magnitude of current which may be drawn by the motor.

The switching apparatus may be operable to switch the maximum magnitude of current which may be drawn by the motor by switching the current limiting device from a first relatively low maximum current to a second relative high maximum current value.

Thus, if an operator in a production line, for example, inserts a screw correctly into a screw receiving part, and uses a motor driven tool according to the invention to drive the screw into the screw receiving part, initially, as resistance to driving the screw is low, the screw is driven with a low torque, until after a predetermined time or number of revolutions, the switching apparatus automatically operates to increase the maximum output torque, so that the increasing resistance to driving of the screw may be overcome and the screw may be driven into its final position.

If, however, the operator inserts a screw incorrectly into a screw receiving part and attempts to drive the screw using a motor driven tool according to the invention, the initial resistance to driving of the screw is higher than it would be if the screw were inserted correctly, and the first magnitude of the maximum output torque is not sufficiently high to overcome the initial resistance. Thus, rotation of the drive head is prevented or restricted, and damage to the screw receiving part is reduced or completely eliminated.

Moreover, not only is damage to the components in a production line reduced by virtue of the invention, but also the time taken to assemble the components is not substantially increased.

### Brief Description of the Drawings

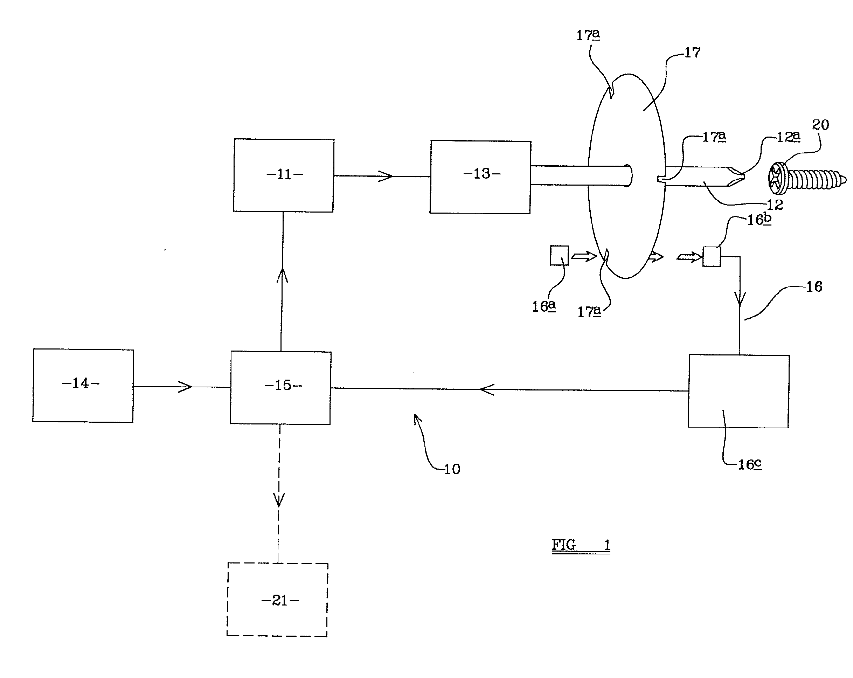

An embodiment of the invention will now be described, by way of example only, with reference to and/or as shown in the accompanying drawing which shows a schematic illustration of a rotary motor driven tool embodying the invention.

### Detailed Description of the Preferred Embodiments

Referring now to the drawing, there is shown a rotary motor driven tool 10, comprising a motor 11, and a driven part 12. The motor 11 is connected to the driven part 12 by a transmission means 13 which may include at least one gear, such that power is transmitted from the motor 11 to rotate the driven part 12 about a longitudinal axis. In this case, the motor 11 is a DC electric motor, but it may be an AC motor. Power is supplied to the motor 11 by a power supply 14.

In this example, the tool 10 is a screwdriver, and thus an end 12a of the driven part 12 is of an appropriate configuration to be engageable with a head of a standard screw 20, and the tool 10 may therefore for used for driving the screw 20 into a screw receiving part.

The maximum torque capable of being exerted by the motor 11, which in turn determines the output torque from the driven part 12 exerted on the screw 20, is determined by the maximum current which may be drawn by the motor 11 from the power supply 14. The higher the current, the higher the output torque. The magnitude of the current which may be drawn by the motor 11 is limited to a maximum value which is set by a current limiting device 15.

The tool 10 further comprises a switching apparatus 16 operable to switch the maximum output torque set by the current limiting device 15 from a first lower magnitude to a second higher magnitude when a threshold criterion is reached. In the present example, the threshold criterion comprises a preselected number of revolutions to be executed by the driven part 12.

The switching apparatus 16 comprises a light emitter 16a and a corresponding light or laser beam detector 16b, and an electronic counter 16c operable to maintain a count value which is initially set to zero. A marker device 17 comprising a disc with three slots 17a equally spaced around the edge of the disc, is mounted around the driven part 12 for rotation with the driven part 12 the driven part 12 extending generally through the centre of and normal to the plane of the disc.

The light emitter 16a and detector 16b are arranged relative to the marker device 17 such that a beam of light from the emitter 16a passes through one of the slots 17a and is detected by the detector 16b. When the driven part 12 rotates, the slot 17a moves out of alignment, and passage of the light beam from the emitter 16a to the detector 16b is blocked by the marker device 17, and light is no longer detected by the detector 16b. When a slot 17a passes between the light emitter 16a and the detector 16b, a relatively high current is generated by the light detector 16b, and when the beam is blocked by the marker device 17, a relatively low current is generated. Thus, the passage of a slot 17a between the emitter 16a and detector 16b, results in an electrical pulse which is generated by the detector 16b and received by the electronic counter 16c. The counter 16c will increment a count value each time a pulse is received. Thus, the number of pulses of light counted by the electronic counter 16c provides an indication of the number of revolutions executed by the driven part 12.

In this case, as more than one slot 17a is provided the number of revolutions counted by the electronic counter 16c need not be an integer. For example, if the counter 16c has detected two pulses, the driven part 12 has executed between 1/3 and 2/3 of a revolution, and if the electronic counter 16c has counted four pulses the driven part has completed one revolution.

The electronic counter 16c is connected to the current limiting device 15, and is adapted to send a signal to the current limiting device 15 after the count value held by the electronic counter 16c has reached a predetermined number corresponding to a number of light pulses, instructing the current limiting device to switch the maximum current setting from a first lower value to a second higher value. The number of light pulses to be detected before switching occurs is determined from a consideration of the pitch and depth of the thread of the screw 20, as this gives an indication of the number of turns required to establish if the screw 20 is correctly engaged in the thread of the screw receiving part. This number may be fixed, or the counter 16c may be adapted so that the number can be changed by an operator or otherwise in response to the exact conditions in which the screwdriver 10 is to be used.

In this embodiment the motor 11, power supply 14, the transmission means 13, the driven part 12 and marker device 17, the torque limiting device 15 and the counter 16c are all physically contained within the tool 10. This need not be the case, however, as one or more of the components, for example one or more of the power supply 14, torque limiting device 15 and counter 16c, may be provided remotely from the tool 10.

To provide a warning or other output to an operator, an output element may be provided, here shown in dashed outline at 21. The output element 21 may comprise a light or a sound generator or any other appropriate element perceivable by an operator. The output element 21 is responsive to the torque limiting device 15 to provide an ouput when the current limiting device 15 is set to a maximum current setting having a first lower value and the motor 11 attempts to draw a greater current, indicating that the driven part 12 has stopped rotating.

The tool 10 may thus be operated as follows, for example, by an operator in a production line to fasten two components together.

The operator inserts a screw into a screw receiving part, for example a threaded hole in a circuit board or other component of a personal computer, and engages the end 12a of the driven part 12 with a head of the screw 20. The operator then operates a push button which activates the motor 11 by enabling power to be supplied to the motor 11. Initially, the current limiting device sets the maximum current which can be drawn by the motor 11 to a first relatively low value. If the screw is inserted correctly in the hole, typically with a longitudinal axis of the screw parallel to a longitudinal axis of the hole and with the thread of the screw engaging correctly with the thread of the hole, the initial resistance to the turning of the screw is low. The maximum current set by the current limiting device 15 is sufficiently high for the motor to be capable of providing sufficient output torque to cause the screw 20 to rotated when correctly engaged with the screw receiving part.

The electronic counter 16c counts the number of light pulses detected by detector 16b, and when the predetermined number has been counted, i.e. when the driven part, and hence the screw, has rotated through the present number of revolutions, the counter 16c sends a signal to the current limiting device 15, and the maximum current set by the current limiting device 15 is switched from the first lower value, to a second higher value. Thus, the motor 11 is capable of drawing a higher current and hence providing an increased output torque.

The screw 20 continues to rotate and to be driven into the screw receiving part, until, as the final position of the screw is approached, resistance to further rotation of the screw increases. The speed of revolution of the driven part 12 and screw decreases until, when the output torque is no longer sufficient to overcome the resistance, the driven part 12 and screw come to a stop. The second value of maximum current is set such that sufficient torque can be provided to drive the screw into its final position, without driving the screw further into the screw receiving part than is required.

The operator may then deactivate the tool 10, for example, by releasing a push button to stop power supply to the motor 11, and disengage the driven part 12 from the screw head. Deactivating the tool 10 results in the maximum current setting automatically returning to the first lower value, and the count value of the electronic counter 16c being reset to zero. The tool 10 is then ready for use again.

If, however, the operator has inserted the screw incorrectly in the screw receiving part, for example, with the longitudinal axis of the screw not parallel to the longitudinal axis of the hole and/or the thread of the screw not properly engaged with the thread of the hole, there is initially relatively high resistance to rotation of the screw. The first value of maximum current is set such that the motor cannot provide sufficient torque to overcome such resistance, and therefore the tool 10 cannot rotate the screw. As there is no revolution of the driven part 12, the predetermined number of light pulses are not counted by the counter 16c, and therefore the maximum current setting is not switched to the second higher value. It will be apparent to the operator that the screw 20 is no longer being driven into the screw receiving part and that the screw should be removed and reinserted. Where an output element 21 is provided, the operator will also receive an indication, for example a warning light or a beep, that the driven part 12 has stopped rotating when when the maximum current setting is at the first lower value.

Thus, the chance of the operator inadvertently damaging the component is substantially reduced, with no associated increase in the time required to fasten the components together. Moreover there can be no or only relatively little damage to the screw receiving part such as stripping of the threads.

It will be appreciated that various modifications may be made, without effecting the scope of the invention.

For example, the marker device 17 may be provided with more or fewer than three slots 17a, and the slots 17a may be replaced by apertures in the disc. Moreover, any other marker device which enables the angle of revolution to be determined by an optical or any other kind of revolution counting device may be used.

The marker device 17 need not be provided on the driven part 12, it may, instead, be provided as part of the transmission means 13.

It is not necessary to provide a revolution counting device if some other threshold criterion is used. For example, the tool 10 may be provided with a timer which initiates switching of the maximum current setting from the first value to the second value providing the driven part 12a has rotated a predetermined length of time.

Rather than providing a current limiting device, the maximum output torque may be set using a mechanical torque limitation means, in which case, the motor may be pneumatically driven. Such mechanical torque limitation means may include a releasable clutch which operates to disengage the driven part 12 from the motor 11, or torque sensing mechanism which is designed to cut off power supply to the motor 11 at a predetermined torque value.

For example, a slip clutch comprising two clutch halves which are urged into contact with each other by resilient biasing means, may be provided in the transmission means 13 between the driven part 12 and the motor 11. At a low torque, friction between the two clutch halves ensures that the driven part 12 rotates at the speed set by the motor 11, but if the driven part 12 encounters significant resistance, the clutch halves will slip and reduce the speed of the driven part 12 with respect to the motor 11, and hence limit the output torque. As the friction developed between the two clutch halves is determined by the force under which the two halves are urged together, the torque at which slip occurs can be controlled by altering the strength of the resilient biasing means. Thus, when the driven part 12 has rotated by a predetermined number of revolutions, the maximum torque setting may be switched to a higher value using mechanical means to increase the force exerted on the two clutch halves by the resilient biasing means.

A ratchet type clutch may be provided. In this case the two clutch halves are engaged by means of an array of clutch teeth, and the depth of engagement determines the limit of the torque that may be transmitted by the clutch. Thus, the maximum torque setting may be switched to a higher value by bringing the clutch parts closer together so that the depth of engagement of the clutch teeth is increased.

Alternatively, the transmission means 13 may be provided with a motor de-energising means, which is resiliently biased is such a position to enable power to be supplied to the motor 11, but which is capable of being moved against the biasing force to cut off power supply to the motor. If the magnitude of the output torque exceeds a set maximum value, the motor de-energising means moves to cut off the power supply to the motor 11. The maximum output torque may be set by adjusting the strength of the resilient biasing means.

An output device 21 may be provided to generate any appropriate output or warning as desired, and may be responsive to any appropriate component of the tool 10. For example, the ouput device 21 may be responsive to the output of the counter 16c and when no signal is received from the counter 16c within a set time period from the tool 10 being operated, may infer that the driven part 12 has stopped rotating and generate an output accordingly.

Where a mechanical torque limiting device is used, the motor need not be an electric motor. Any other motor, such as a pneumatically powered motor, may be provided.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A rotary motor driven tool (10) comprising a motor (11), and a driven part (12), the motor (11) being adapted to rotate the driven part (12), and a torque limiting device (15) adapted to limit torque output of the driven part (12) to a maximum output torque magnitude, **characterised in that** the tool (10) further includes a switching apparatus (16) operable to switch the maximum output torque set by the torque limiting device (15) from a first lower magnitude to a second higher magnitude when a threshold criterion is reached.

2. A rotary motor driven tool (10) according to claim 1 wherein the switching apparatus (16) is responsive to the number of revolutions of the driven part (12) and wherein the threshold criterion comprises a preselected number of revolutions to be executed by the driven part (12).

3. A rotary motor driven tool (10) according to claim 2 wherein the switching apparatus (16) comprises a counter (16c) which is operable to count the number of revolutions the driven part (12) has executed.

4. A rotary motor driven tool (10) according to claim 3 wherein the driven apparatus (16) is provided with at least one marker device (17), and the switching means comprises an optical detector (16b) operable to detect when the marker device (17) is at a given position and transmit a signal to the counter (16c).

5. A rotary motor driven tool (10) according to claim 1 wherein the switching apparatus (16) operates when the driven part (12) has rotated for a predetermined length of time.

6. A rotary motor driven tool (10) according to any one of claims 1 to 5 wherein the driven part (12) is adapted to engage with a screw head, such that the tool (10) may be used to drive a screw into a screw receiving part.

7. A rotary motor driven tool (10) according to any one of claims 1 to 6 wherein the motor (11) is an electric motor, and the torque limiting device (15) comprises a current limiting device which sets a maximum magnitude of current which may be drawn by the motor (11).

8. A rotary motor driven tool (10) according to claim 5 wherein the switching apparatus (16) is operable to switch the maximum magnitude of current which may be drawn by the motor (11) by switching the current limiting device (15) from a first relatively low maximum current to a second relatively high maximum current.
